# EUROPEAN PATENT APPLICATION

(11) **EP 4 760 631 A1**
(43) Date of publication of application: **17.06.2026**
(21) Application number: 25200101.1
(22) Date of filing: 04.09.2025
(51) Int. Cl.: G06T 1/20, G06T 15/00

(54) **METHOD AND APPARATUS FOR SYNCHRONOUSLY PROCESSING GRAPHICS PIPELINE**

(30) Priority: 13.12.2024 KR 20240186213
(71) Applicant: Samsung Electronics Co., Ltd., Suwon-si, Gyeonggi-do 16677 (KR)
(72) Inventor: YU, Hyeonseung, 16678 Eindhoven (KR); PARK, Joonkyu, 16678 Suwon-Si (KR); KANG, Nahyup, 16678 Suwon-Si (KR)
(74) Representative: Marks & Clerk LLP

(57) **Abstract**

A method and apparatus for synchronously processing a graphics pipeline using a main processor, including: instructing a first auxiliary processor to render a first image frame to generate first input buffer data, and to generate a first signal associated with a first synchronization object regarding the first input buffer data; instructing the first auxiliary processor to perform post-processing based on first output buffer data according to a second signal associated with a second synchronization object regarding the first output buffer data; and based on the first signal being generated, controlling a second auxiliary processor to perform an artificial intelligence (AI) inference based on the first input buffer data to generate the first output buffer data; and based on the AI inference being completed, generating the second signal.

## Description

### BACKGROUND

### 1. Field

The disclosure relates to a method and apparatus for synchronously processing a graphics pipeline.

### 2. Description of Related Art

Application technology that utilizes an artificial intelligence (AI) accelerator to apply AI to computer graphics technology is being actively developed. For example, an AI accelerator may be used for supersampling. Supersampling may refer to technology that may be used to generate a high-quality, high-resolution image by removing an aliasing effect that occurs in a low-resolution image. In addition, an AI accelerator may be used to reduce noise in a rendered ray tracing image.

### SUMMARY

One or more embodiments may address at least the above problems and/or disadvantages, and/or may address other problems and/or disadvantages not described above.

In accordance with an aspect of the disclosure, an operating method as defined in any of the appended claims 1-13 is provided.

In accordance with another aspect of the disclosure, a non-transitory computer-readable medium as defined in appended claim 14 is provided.

In accordance with yet another aspect of the disclosure, an electronic device as defined in appended claim 15 is provided.

Additional aspects will be set forth in part in the description which follows and, in part, will be apparent from the description, or may be learned by practice of the presented embodiments.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a diagram illustrating processors included in an electronic device, according to an embodiment;
FIG. 2 is a diagram illustrating a graphics pipeline using a first auxiliary processor and a second auxiliary processor, according to an embodiment;
FIG. 3 is a diagram illustrating an operating method of a main processor for synchronously processing a graphics pipeline, according to an embodiment;
FIG. 4 is a diagram illustrating detailed operations of processors, according to an embodiment;
FIG. 5 is a diagram illustrating detailed operations of a first thread and a second thread, according to an embodiment;
FIG. 6 is a diagram illustrating an input buffer and an output buffer used for data transmission, according to an embodiment;
FIG. 7 is a diagram illustrating an example in which uploading is performed by a second auxiliary processor, according to an embodiment;
FIG. 8 is a diagram illustrating an example in which uploading is omitted, according to an embodiment; and
FIG. 9 is a diagram illustrating a configuration of an electronic device, according to an embodiment.

### DETAILED DESCRIPTION

The following detailed structural or functional description is provided as an example only, and various alterations and modifications may be made to the embodiments without departing from the scope of the disclosure. Thus, an actual form of implementation should not be construed as limited to the particular embodiments described herein, and should be understood to include all changes, equivalents, and replacements within the idea and the technical scope of the disclosure.

Although terms, such as first, second, and the like are used to describe various components, the components are not limited to these terms. Instead, these terms are used only to distinguish one component from another component. For example, a first component may be referred to as a second component, and similarly, the second component may also be referred to as the first component.

It should be noted that when a first component is described as being "connected," "coupled," or "joined" to a second component, the first component may be directly "connected", "coupled", or "joined" to the second component, or a third component may be "connected," "coupled," or "joined" between the first and second components.

The singular forms "a," "an," and "the" are intended to include the plural forms as well, unless the context clearly indicates otherwise. It will be further understood that the terms "comprises/comprising" and/or "includes/including," when used herein, specify the presence of stated features, integers, steps, operations, elements, and/or components, but do not preclude the presence or addition of one or more other features, integers, steps, operations, elements, components and/or groups thereof.

As used herein, each of phrases such as "at least one of A and B," or "at least one of A, B, or C" may include any one of the items listed together in the corresponding one of the phrases or all possible combinations thereof. As used herein, expressions such as "at least one of," when preceding a list of elements, modify the entire list of elements and do not modify the individual elements of the list. For example, the expression, "at least one of A, B, and C," should be understood as including only A, only B, only C, both A and B, both A and C, both B and C, or all of A, B, and C.

Unless otherwise defined, all terms used herein including technical and scientific terms have the same meanings as those commonly understood by one of ordinary skill in the art to which this disclosure pertains. Terms such as those defined in commonly used dictionaries are to be interpreted as having a meaning that is consistent with their meaning in the context of the relevant art and are not to be interpreted in an idealized or overly formal sense unless expressly so defined herein.

Hereinafter, the embodiments are described in detail with reference to the accompanying drawings. When describing the embodiments with reference to the accompanying drawings, like reference numerals refer to like components and a repeated description related thereto is omitted.

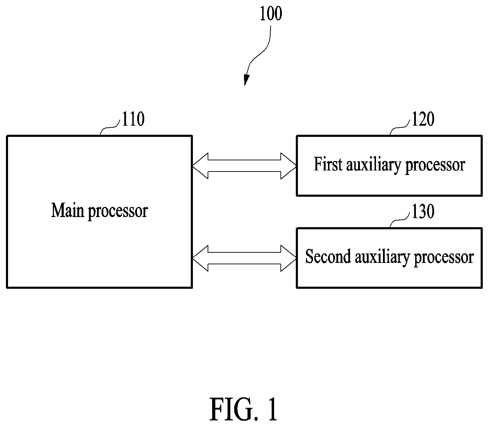

FIG. 1 is a diagram illustrating processors included in an electronic device, according to an embodiment. Referring to FIG. 1, an electronic device 100 may include a main processor 110, a first auxiliary processor 120, and a second auxiliary processor 130. The first auxiliary processor 120 and/or the second auxiliary processor 130 may assist an operation of the main processor 110. For example, the main processor 110 may process operations included in a graphics pipeline using the first auxiliary processor 120 and/or the second auxiliary processor 130.

The first auxiliary processor 120 and/or the second auxiliary processor 130 may have an architecture specialized for an operation such as parallel processing. The first auxiliary processor 120 may have an architecture specialized for a graphics operation, and the second auxiliary processor 130 may have an architecture specialized for an artificial intelligence (AI) operation, but are not limited thereto. For example, the AI operation may include an operation for training on and/or performing inference with a deep learning model. For example, the AI operation may include a neural operation such as a multiply-accumulate (MAC) operation.

The main processor 110 may be, or may include, a central processing unit (CPU), the first auxiliary processor 120 may be, or may include, a graphic processing unit (GPU), and the second auxiliary processor 130 may be, or may include, an AI accelerator, but embodiments are not limited thereto. For example, the AI accelerator may be, but is not limited to, at least one of a neural processing unit (NPU), a tensor processing unit (TPU), and another AI accelerator.

Embodiments may be applied to the electronic device 100 including both the first auxiliary processor 120 and the second auxiliary processor 130. For example, embodiments may be applied to various types of electronic devices that use the first auxiliary processor 120 and the second auxiliary processor 130, such as a mobile device, a game console, a head-mounted display (HMD), a wearable device, an augmented reality (AR) device, a virtual reality (VR) device, an automobile infotainment system, and the like.

In order for the main processor 110 to efficiently use the first auxiliary processor 120 and the second auxiliary processor 130, synchronization between the main processor 110, the first auxiliary processor 120, and the second auxiliary processor 130 may be used. According to an embodiment, the first auxiliary processor 120 may not be synchronized with the main processor 110, and the second auxiliary processor 130 may be synchronized with the main processor 110. In this case, the first auxiliary processor 120 may not be synchronized with the second auxiliary processor 130.

For example, the main processor 110 may submit commands to a command queue of the first auxiliary processor 120, and the first auxiliary processor 120 may sequentially process the commands submitted to the command queue. In this case, without additional synchronization being performed, it may be difficult for the main processor 110 to determine whether the commands in the command queue have been processed. The main processor 110 may directly control the second auxiliary processor 130 and/or directly determine a processing status of the second auxiliary processor 130.

Despite a synchronized state between the main processor 110 and the second auxiliary processor 130, the first auxiliary processor 120 and the second auxiliary processor 130 may not be efficiently used due to a synchronization problem of the first auxiliary processor 120. According to an embodiment, the main processor 110 may synchronize the main processor 110, the first auxiliary processor 120, and the second auxiliary processor 130 using a synchronization object to efficiently use the first auxiliary processor 120 and the second auxiliary processor 130.

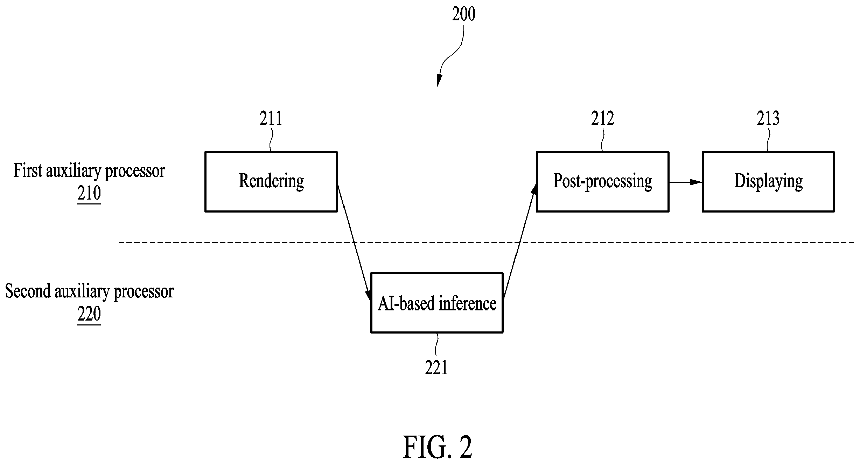

FIG. 2 is a diagram illustrating a graphics pipeline using a first auxiliary processor and a second auxiliary processor, according to an embodiment. Referring to FIG. 2, a graphics pipeline 200 may include a rendering operation 211, an AI-based inference operation 221, a post-processing operation 212, and a displaying operation 213. The rendering operation 211, the post-processing operation 212, and the displaying operation 213 may be performed by a first auxiliary processor 210, and the AI-based inference operation 221 may be performed by a second auxiliary processor 220. According to embodiments, the first auxiliary processor 210 may correspond to the first auxiliary processor 120 discussed above, the second auxiliary processor 220 may correspond to the second auxiliary processor 130 discussed above, and the graphics pipeline 200 may be controlled by a main processor that corresponds to the main processor 110 discussed above, but embodiments are not limited thereto.

The first auxiliary processor 210 may perform the rendering operation 211 to generate a rendering result corresponding to a target scene. The rendering result may be an initial image frame. For example, the first auxiliary processor 210 may perform the rendering operation 211 to generate a two-dimensional image frame corresponding to a three-dimensional target scene of computer graphics. For example, the rendering operation 211 may include, but is not limited to, G-buffer generation, input buffer layout processing, and the like.

The second auxiliary processor 220 may perform the AI-based inference operation 221 to improve the rendering result. An AI model may be used for the AI-based inference operation 221. The AI-based inference operation may refer to a process of making predictions or decisions based on a trained AI model (e.g., a trained neural-network model using learned parameters, such as weights and biases). The AI model may be, for example, a deep learning model based on a neural network. The AI model may be pre-trained to enhance an input image through the AI-based inference operation 221 to generate an output image. For example, image enhancement by the AI-based inference operation 221 may include, but is not limited to, super sampling, image quality enhancement, denoising, increasing resolution, and the like.

The first auxiliary processor 210 may perform the post-processing operation 212 on an inference result. A post-processing result may be a final image frame. For example, the post-processing operation 212 may include, but is not limited to, various processing such as kernel-filtering, temporal-history, denoising, bloom, depth of field, and the like. The first auxiliary processor 210 may perform the displaying operation 213 regarding the post-processing result.

By adding the AI-based inference operation 221 to the graphics pipeline 200, graphics of the displaying operation 213 may be improved. The second auxiliary processor 220 may have an architecture specialized for the AI-based inference operation 221. When the second auxiliary processor 220 is appropriately used for the AI-based inference operation 221, a speed improvement may be expected compared to when the graphics pipeline 200 is processed entirely using the first auxiliary processor 210. In order for the second auxiliary processor 220 to be properly used, synchronization between the first auxiliary processor 210 and the second auxiliary processor 220 may be required.

The rendering result generated by the first auxiliary processor 210 may be transferred to the second auxiliary processor 220 as input buffer data of the second auxiliary processor 220. The second auxiliary processor 220 may perform the AI-based inference operation 221 based on the input buffer data and generate output buffer data corresponding to the inference result. The first auxiliary processor 210 may perform the post-processing operation 212 based on the output buffer data.

Operations in a process of generating the input buffer data, such as the rendering operation 211, may be referred to as a before-input path or pre-input path. Operations in a process of processing the output buffer data, such as the post-processing operation 212, may be referred to as an after-output path or a post-output path. The first auxiliary processor 210 may perform the operations of the pre-input path including the rendering operation 211 to generate the input buffer data. The first auxiliary processor 210 may perform the operations of the post-output path including the post-processing operation 212 to process the output buffer data. Hereinafter, the rendering operation 211 and the post-processing operation 212 may be described as representing the pre-input path and the post-output path, and any discussion herein of the rendering operation 211 and the post-processing operation 212 may be also be understood to refer to or represent the pre-input path and the post-output path.

When the AI-based inference operation 221 is performed by the second auxiliary processor 220 immediately (or substantially immediately) after the input buffer data is generated by the first auxiliary processor 210, and when the post-processing operation 212 is performed by the first auxiliary processor 210 immediately (or substantially immediately) after the output buffer data is generated by the second auxiliary processor 220, efficient processing of the graphics pipeline 200 may be performed. Without a synchronization being performed between the first auxiliary processor 210 and the second auxiliary processor 220, such processing without latency may be difficult. For example, when the first auxiliary processor 210 generates the input buffer data and finishes all tasks currently in-progress, and subsequently the second auxiliary processor 220 performs the AI-based inference operation 221, tasks of the first auxiliary processor 210 that are unrelated to the input buffer data may be interrupted, thereby causing inefficiency.

According to an embodiment, the first auxiliary processor 210 may be synchronized with the second auxiliary processor 220 using a synchronization object. The synchronization object may be provided by a graphics application programming interface (API). For example, the graphics API may include, but is not limited to, Vulkan and DirectX. For example, the synchronization object may include, but is not limited to, a fence and a semaphore.

The main processor may generate a synchronization object using the graphics API, and may synchronize the first auxiliary processor 210 with the second auxiliary processor 220 using the synchronization object. For example, the main processor may determine a timepoint at which the rendering operation 211 of the first auxiliary processor 210 is completed using the synchronization object and perform the AI-based inference operation 221 using the second auxiliary processor 220 at that timepoint. In addition, the main processor may cause (e.g., request, instruct, or control) the first auxiliary processor 210 to wait until the AI-based inference operation 221 is completed, and the first auxiliary processor 210 may perform the post-processing 212 at that timepoint.

In addition, the main processor may use (e.g., operate or execute) a first thread that submits commands for the rendering operation 211 and the post-processing operation 212 to the first auxiliary processor 210, and a second thread that controls the second auxiliary processor 220 to perform the AI-based inference operation 221. As explained in more detail below, using the first thread and the second thread, latency between the operations of the graphics pipeline 200 (e.g., the rendering operation 211 and the post-processing operation 212) may be minimized, and a processing time of the graphics pipeline 200 may be reduced.

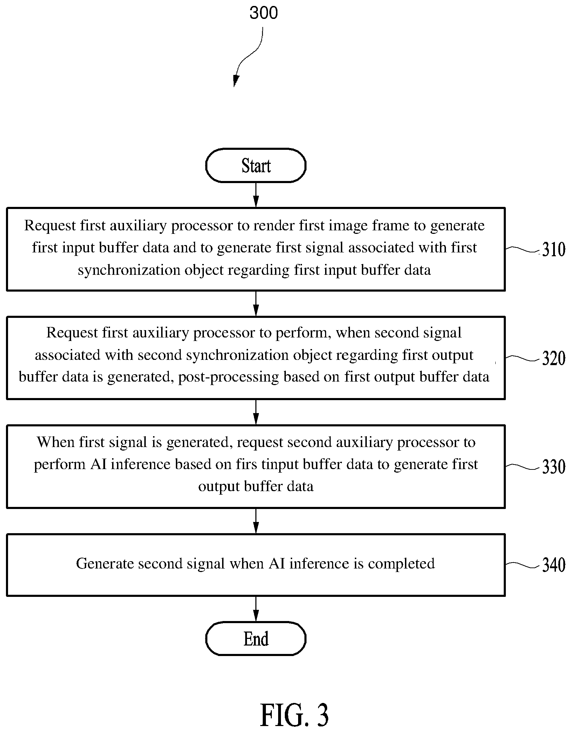

FIG. 3 is a diagram illustrating an process 300 synchronously processing a graphics pipeline using a main processor, according to an embodiment. According to embodiments, the main processor may correspond to the main processor 110 discussed above, and the process 300 may be performed by a first auxiliary processor corresponding to at least one of the first auxiliary processor 120 and the first auxiliary processor 210 discussed above, and a second auxiliary processor corresponding to at least one of the second auxiliary processor 130 and the second auxiliary processor 220 discussed above, but embodiments are not limited thereto.

Referring to FIG. 3, at operation 310, the main processor may request a first auxiliary processor to render a first image frame to generate first input buffer data, and then generate a first signal associated with a first synchronization object regarding the first input buffer data. According to embodiments, a request may correspond to at least one of an instruction and a command.

The first image frame may be an image frame at a timepoint t. An image frame at a timepoint t+1 may be a second image frame. When the first image frame is rendered at the timepoint t, the first input buffer data may be generated, and when the second image frame is rendered at the timepoint t+1, second input buffer data may be generated.

The main processor may use the first synchronization object and a second synchronization object to synchronize the first auxiliary processor with the second auxiliary processor. The first synchronization object may be used to synchronize rendering operations, and the second synchronization object may be used to synchronize post-processing operations. Each synchronization object may be provided by a graphics API. For example, the graphics API may include, but is not limited to, Vulkan and DirectX.

For example, the synchronization object may include, but is not limited to, a fence and a semaphore. For example, the first synchronization object may be at least one of a fence and a semaphore, and the second synchronization object may be semaphore. However, embodiments are not limited thereto. Semaphore may include binary semaphore and/or timeline semaphore. A semaphore may be used for GPU to CPU synchronization, GPU to GPU synchronization, and CPU to GPU synchronization, and a fence may be used for GPU to CPU synchronization. According to embodiments, a fence may be replaced with a semaphore.

Each synchronization object may use or include a signaling subject and a waiting subject. For example, the first auxiliary processor may finish a task and intend to notify the main processor that the task is finished. In this case, the main processor may generate a synchronization object A, set the first auxiliary processor to generate a signal associated with the synchronization object A, and set the main processor to wait for that signal.

The first auxiliary processor may render the first image frame to generate the first input buffer data in response to a request of the main processor at operation 310. When the first input buffer data is generated, the first auxiliary processor may generate a first signal associated with the first synchronization object. According to embodiments, "when" may be used to mean "based on" or "in response to", and therefore may refer to operations which depend on each other temporally without requiring a strict temporal equivalence. For example, according to embodiments, an operation that is described as being performed "when" a signal is generated may be performed based on, or in response to, the signal being generated, and therefore may be performed after the signal is generated, and not necessarily while the signal is generated.

At operation 320, the main processor may request the first auxiliary processor to perform, when a second signal of the second synchronization object regarding first output buffer data is generated, post-processing based on the first output buffer data. The first auxiliary processor may wait for the second signal of the second synchronization object to be generated, and when the second signal is generated, the first auxiliary processor may perform the post-processing based on the first output buffer data. After operation 330, the first output buffer data may be generated by the second auxiliary processor.

At operation 330, when the first signal is generated, the main processor may request the second auxiliary processor to perform an AI inference based on the first input buffer data to generate the first output buffer data. The AI inference may correspond to an AI-based inference. The main processor may wait for the first signal to be generated, and when the first signal is generated, the main processor may request the second auxiliary processor to generate the first output buffer data. In response to a request of the main processor, the second auxiliary processor may perform the AI inference to generate the first output buffer data. The first output buffer data may be generated based on the AI inference at the t-th timepoint, and the second input buffer data may be generated based on an AI inference at the t+1-th timepoint.

At operation 340, the main processor may generate the second signal when the AI inference is completed. The main processor and the second auxiliary processor may be in a synchronized state, so the main processor may recognize when the AI inference is completed. When the second signal is generated, the first auxiliary processor may perform post-processing based on the first output buffer data.

As discussed above, the first auxiliary processor may not be synchronized with the main processor, and the second auxiliary processor may be synchronized with the main processor. The first auxiliary processor may sequentially process commands submitted to a command queue. The main processor may use the first synchronization object and the second synchronization object to synchronize the first auxiliary processor with the second auxiliary processor with respect to operations of the graphics pipeline. For example, the main processor may be a CPU, the first auxiliary processor may be a GPU, and the second auxiliary processor may be an AI accelerator. For example, the AI accelerator may be, but is not limited to, at least one of an NPU, a TPU, and another AI accelerator.

Operations 310 and 320 may be performed or executed in a first thread, and operations 330 and 340 may be performed or executed in a second thread. The first thread may be a rendering thread, and the second thread may be an inference thread. However, embodiments are not limited thereto. The main processor may launch the first thread and the second thread separately to minimize latency in the graphics pipeline.

Operation 310 may include generating a signaling request of the first synchronization object, wherein the signaling request instructs the first auxiliary processor to generate the first signal regarding the first input buffer data, attaching the signaling request to a rendering request that instructs the first auxiliary processor to render the first image frame to generate the first input buffer data, and submitting the rendering request including the signaling request to the command queue of the first auxiliary processor. The rendering requests may be submitted to the command queue together with the signaling request, but embodiments are not limited thereto, and a submission format may vary. The first auxiliary processor may recognize that the signaling is to be performed after performing the rendering, based on the rendering request including the signaling request.

Operation 320 may include generating a wait request of the second synchronization object, wherein the wait request instructs the first auxiliary processor to wait for the second signal regarding the first output buffer data, attaching the wait request to a post-processing request that instructs the first auxiliary processor to perform post-processing based on the first output buffer data, and submitting the post-processing request including the wait request to the command queue of the first auxiliary processor. The post-processing request may be submitted to the command queue together with the wait request, but embodiments are not limited thereto, and the submission format may vary. The first auxiliary processor may recognize that the post-processing is to be performed after performing the signaling, based on the post-processing request including the wait request.

After the rendering request including the signaling request is submitted to the command queue of the first auxiliary processor, the post-processing request including the wait request may be submitted to the command queue of the first auxiliary processor without idle time. The rendering request including the signaling request and the post-processing request including the wait request may be submitted sequentially. When a rendering request and a pending request are processed in a same thread, a sequential submission may not be possible. This may be because the post-processing request is to be performed after completion of the inference is confirmed. Because the rendering request and the wait request may be processed in separate threads, sequential submissions may be implemented and latency in the graphics pipeline (e.g., latency between the AI inference and the post-processing) may be minimized.

When the first auxiliary processor uses (e.g., corresponds to) a first memory space and the second auxiliary processor uses (e.g., corresponds to) a second memory space, the post-processing may be performed after the first output buffer data is uploaded from the second memory space to the first memory space. According to an embodiment, the first output buffer data may be uploaded to the first memory space by the first auxiliary processor based on the second signal. In this case, at operation 320, the main processor may request the first auxiliary processor to perform, when the second signal is generated, uploading and post-processing. According to an embodiment, the first output buffer data may be uploaded to the first memory space by the second auxiliary processor after the AI inference is completed. When the first auxiliary processor and the second auxiliary processor use a same memory space, post-processing on the first output buffer data may be performed without separate uploading.

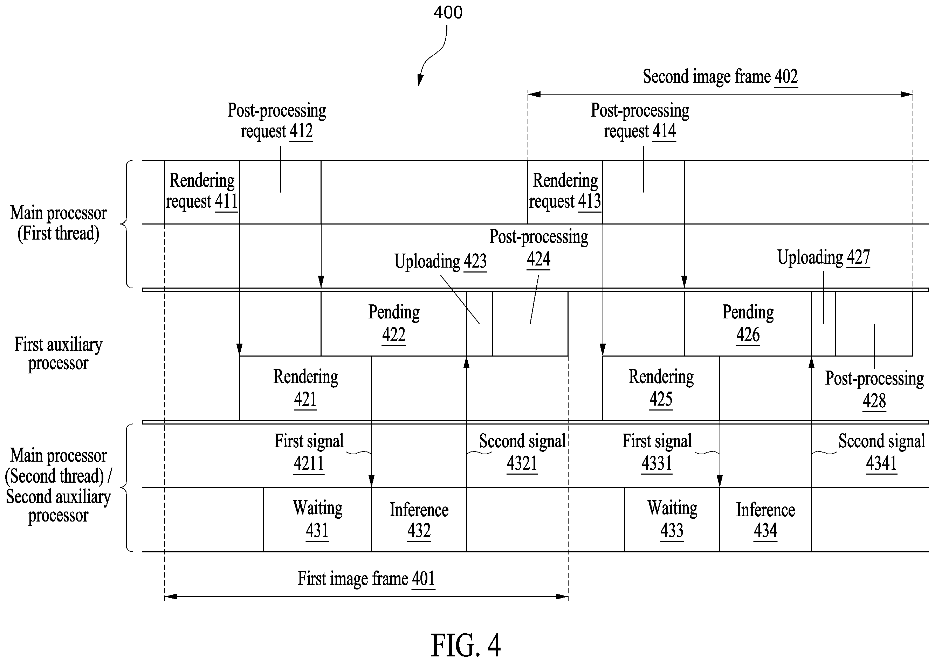

FIG. 4 is a diagram illustrating detailed operations of processors, according to an embodiment. According to embodiments, a process 400 illustrated in FIG. 4 may be performed by a main processor, first auxiliary processor, and a second auxiliary processor. In some embodiments, the main processor may correspond to the main processor 110 discussed above, the first auxiliary processor may correspond to at least one of the first auxiliary processor 120 and the first auxiliary processor 210 discussed above, and the second auxiliary processor may correspond to at least one of the second auxiliary processor 130 and the second auxiliary processor 220 discussed above, but embodiments are not limited thereto.

Referring to FIG. 4, a first image frame 401 and a second image frame 402 may be generated by the main processor, the first auxiliary processor, and the second auxiliary processor. The main processor, the first auxiliary processor, and the second auxiliary processor may repeatedly process a graphics pipeline of the first image frame 401 and the second image frame 402 described below to generate subsequent image frames.

The main processor may perform or generate a rendering request 411 and a post-processing request 412 using a first thread. The rendering request 411 may be a request to perform rendering 421 on the first image frame 401 to generate first input buffer data and then generate a first signal 4211 of a first synchronization object regarding the first input buffer data. A result of the rendering 421 may be an initial version of the first image frame 401. The rendering request 411 may include a signaling request regarding the first signal 4211.

The post-processing request 412 may be a request to perform post-processing 424 on first output buffer data when a second signal 4321 of a second synchronization object regarding the first output buffer data is generated. When uploading 423 is performed by the first auxiliary processor as in the example illustrated in FIG. 4, the post-processing request 412 may be a request to perform the uploading 423 and the post-processing 424 when the second signal 4321 is generated. The post-processing request 412 may include a wait request for the second signal 4321. The rendering request 411 and the post-processing request 412 may be sequentially submitted to a command queue of the first auxiliary processor.

The first auxiliary processor may, based on the rendering request 411, perform the rendering 421 on the first image frame 401 to generate the first input buffer data, and then generate the first signal 4211. The first auxiliary processor may wait for the second signal 4321 by performing a pending operation 422, based on the post-processing request 412. The rendering 421 and the pending operation 422 may be performed in parallel.

The main processor may wait for the first signal 4211 by performing a waiting operation 431 using a second thread. When the first signal 4211 is generated, the main processor may request the second auxiliary processor to perform an inference 432 based on the first input buffer data. The inference 432 may refer to an AI-based inference or an AI inference. The second auxiliary processor may perform the inference 432 to generate the first output buffer data. When the inference 432 is completed, the main processor may generate the second signal 4321 using the second thread.

The first auxiliary processor may wait for the second signal 4321 through the pending operation 422 and, when the second signal 4321 is generated, may perform the uploading 423 and the post-processing 424. A result of the post-processing 424 may be a final version of the first image frame 401. The first auxiliary processor may perform displaying of the graphics pipeline based on the final version.

Operations of the graphics pipeline for the first image frame 401 may be repeated for the second image frame 402. The main processor may perform or generate a rendering request 413 and a post-processing request 414 using the first thread. The post-processing request 414 and/or the rendering request 413 corresponding to the second image frame 402 may overlap with the operations of the graphics pipeline corresponding to the first image frame 401 (e.g., the uploading 423 and the post-processing 424). The fact that the graphics pipeline of the first image frame 401 and the graphics pipeline of the second image frame 402 may overlap may indicate improved efficiency of the graphics pipeline.

The rendering request 413 may be a request to perform rendering 425 on the second image frame 402 to generate second input buffer data, and then generate a first signal 4311 of a first synchronization object regarding the second input buffer data. A result of the rendering 425 may be an initial version of the second image frame 402. The rendering request 413 may include a signaling request regarding a first signal 4331. An input buffer and an output buffer may exist separately for each image frame, and accordingly, overlap between data may be prevented.

The post-processing request 414 may be a request to perform post-processing 428 on second output buffer data when a second signal 4341 of a second synchronization object regarding the second output buffer data is generated. When uploading 427 is performed by the first auxiliary processor as in the example illustrated in FIG. 4, the post-processing request 414 may be a request to perform the uploading 427 and the post-processing 428 when the second signal 4341 is generated. The post-processing request 414 may include a wait request for the second signal 4341. The rendering request 413 and the post-processing request 414 may be sequentially submitted to the command queue of the first auxiliary processor.

The first auxiliary processor may, based on the rendering request 413, perform the rendering 425 on the second image frame 402 to generate the second input buffer data and then generate a first signal 4331. The first auxiliary processor may wait for the second signal 4341 by performing a pending operation 426 based on the post-processing request 414. The rendering 425 and the pending operation 426 may be performed in parallel.

The main processor may wait for the first signal 4331 by performing a operation 433 using the second thread. When the first signal 4331 is generated, the main processor may request the second auxiliary processor to perform an inference 434 based on the second input buffer data. The second auxiliary processor may perform the inference 434 to generate the second output buffer data. When the inference 434 is completed, the main processor may generate the second signal 4341 using the second thread.

The first auxiliary processor may wait for the second signal 4341 through the pending operation 426, and, when the second signal 4341 is generated, may perform the uploading 427 and the post-processing 428. A result of the post-processing 428 may be a final version of the second image frame 402. The second auxiliary processor may perform displaying of the graphics pipeline based on the final version.

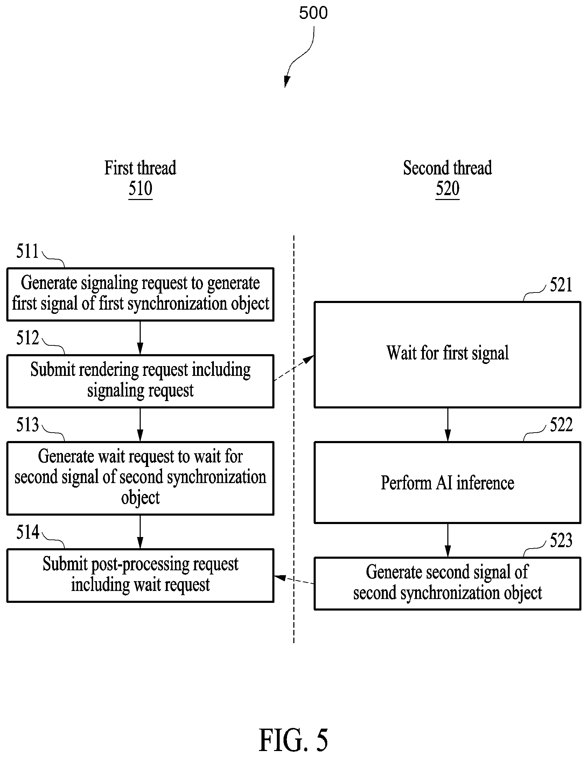

FIG. 5 is a diagram illustrating detailed operations of a first thread and a second thread, according to an embodiment. According to embodiments, a process 500 illustrated in FIG. 5 may be performed by a main processor, first auxiliary processor, and a second auxiliary processor. In some embodiments, the main processor may correspond to the main processor 110 discussed above, the first auxiliary processor may correspond to at least one of the first auxiliary processor 120 and the first auxiliary processor 210 discussed above, and the second auxiliary processor may correspond to at least one of the second auxiliary processor 130 and the second auxiliary processor 220 discussed above, but embodiments are not limited thereto.

Referring to FIG. 5, the main processor may perform operations 511 to 514 in a first thread 510 and perform operations 521 to 523 in a second thread 520.

At operation 511, the main processor may generate a signaling request to generate a first signal of a first synchronization object. At operation 512, the main processor may submit a rendering request including the signaling request. The rendering request may be a request to render a first image frame to generate first input buffer data. The signaling request may be a request to generate the first signal of the first synchronization object on first input buffer data. The main processor may submit the rendering request including the signaling request to a command queue of a first auxiliary processor.

At operation 513, the main processor may generate a wait request to wait for a second signal of a second synchronization object. At operation 514, the main processor may submit a post-processing request including the wait request. The post-processing request may be a request to perform post-processing based on first output buffer data. The wait request may be a request to wait for the second signal regarding the first output buffer data. The main processor may submit the post-processing request including the wait request to the command queue of the first auxiliary processor.

At operation 521, the main processor may wait for the first signal. When the first signal is generated, the main processor may perform an AI inference at operation 522. The main processor may perform the AI inference using a second auxiliary processor. When the AI inference is completed, the main processor may generate the second signal of the second synchronization object at operation 523.

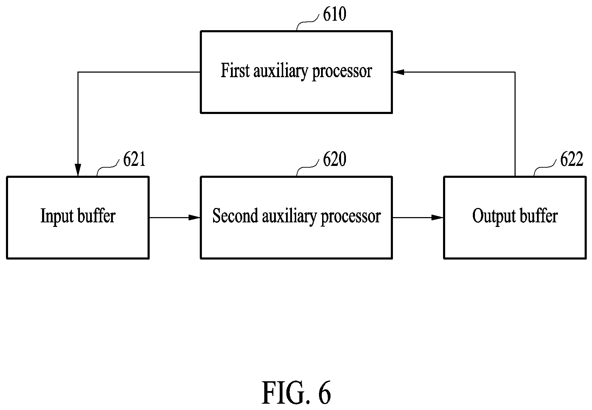

FIG. 6 is a diagram illustrating an input buffer and an output buffer used for data transmission, according to an embodiment. Referring to FIG. 6, a first auxiliary processor 610 may render an image frame to generate input buffer data and may store the input buffer data in an input buffer 621. A second auxiliary processor 620 may perform AI inference based on input buffer data to generate output buffer data and store the output buffer data in an output buffer 622. The first auxiliary processor 610 may perform post-processing based on the output buffer data. According to embodiments, the first auxiliary processor may correspond to at least one of the first auxiliary processor 120 and the first auxiliary processor 210 discussed above, and the second auxiliary processor may correspond at least one of the second auxiliary processor 130 and the second auxiliary processor 220 discussed above, but embodiments are not limited thereto.

When the first auxiliary processor 610 and the second auxiliary processor 620 use different memory spaces, the input buffer 621 and the output buffer 622 may be formed or included in a memory space of the second auxiliary processor 620. In this case, data transfer may be performed between a memory space associated with the first auxiliary processor 610 and the memory space associated with the second auxiliary processor 620. For example, for post-processing of the first auxiliary processor 610, the output buffer data in the output buffer 622 may be uploaded to the memory space associated with the first auxiliary processor 610. When the first auxiliary processor 610 and the second auxiliary processor 620 use a same memory space, the uploading operation may be omitted.

According to an embodiment, the uploading operation may be performed by the first auxiliary processor 610. The process 400 illustrated in FIG. 4 may correspond to an example in which the uploading operation is performed by the first auxiliary processor 610. In this case, a post-processing request may be a request for uploading and post-processing. When a second signal is generated, the first auxiliary processor 610 may perform the uploading and the post-processing.

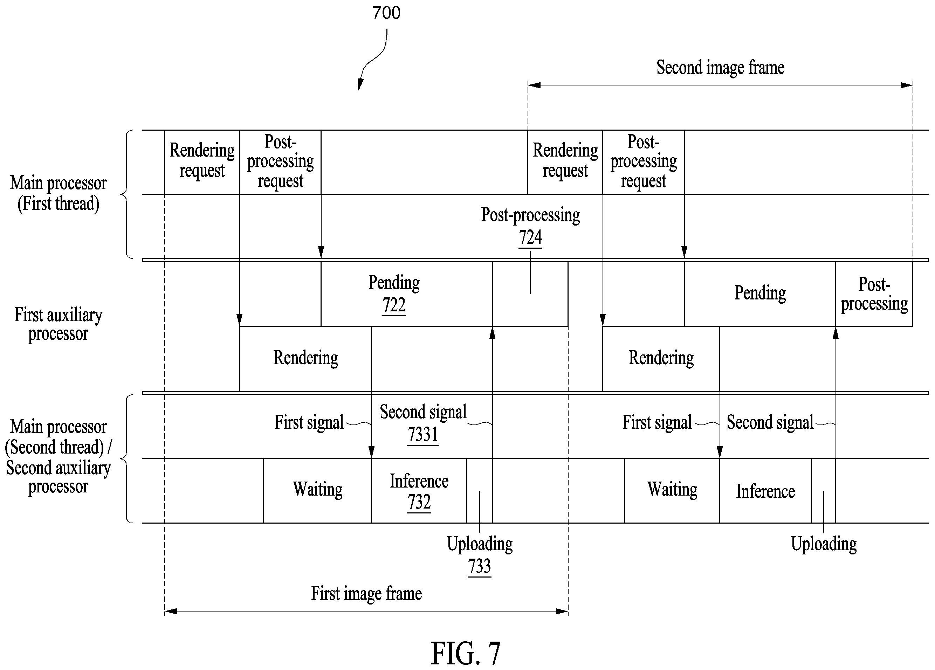

According to an embodiment, the uploading operation may be performed by the second auxiliary processor 620. The process 700 illustrated in FIG. 7 may correspond to an example in which an uploading operation is performed by the second auxiliary processor 620. In this case, a main processor may request a second auxiliary processor to perform an inference and uploading in a second thread. The main processor may generate the second signal after the inference and the uploading are completed.

FIG. 7 is a diagram illustrating an example in which uploading is performed by a second auxiliary processor, according to an embodiment. According to embodiments, a process 700 illustrated in FIG. 7 may be performed by a main processor, first auxiliary processor, and a second auxiliary processor. In some embodiments, the main processor may correspond to the main processor 110 discussed above, the first auxiliary processor may correspond to at least one of the first auxiliary processor 120, the first auxiliary processor 210, and the first auxiliary processor 610 discussed above, and the second auxiliary processor may correspond to at least one of the second auxiliary processor 130, the second auxiliary processor 220, and the second auxiliary processor 620 discussed above, but embodiments are not limited thereto.

Referring to FIG. 7, a main processor may request the second auxiliary processor to perform an inference 732 and uploading 733 in a second thread. The main processor may generate a second signal 7331 when the inference 732 and the uploading 733 are completed. The first auxiliary processor may wait for the second signal 7331 through pending operation 722 and may subsequently perform post-processing 724.

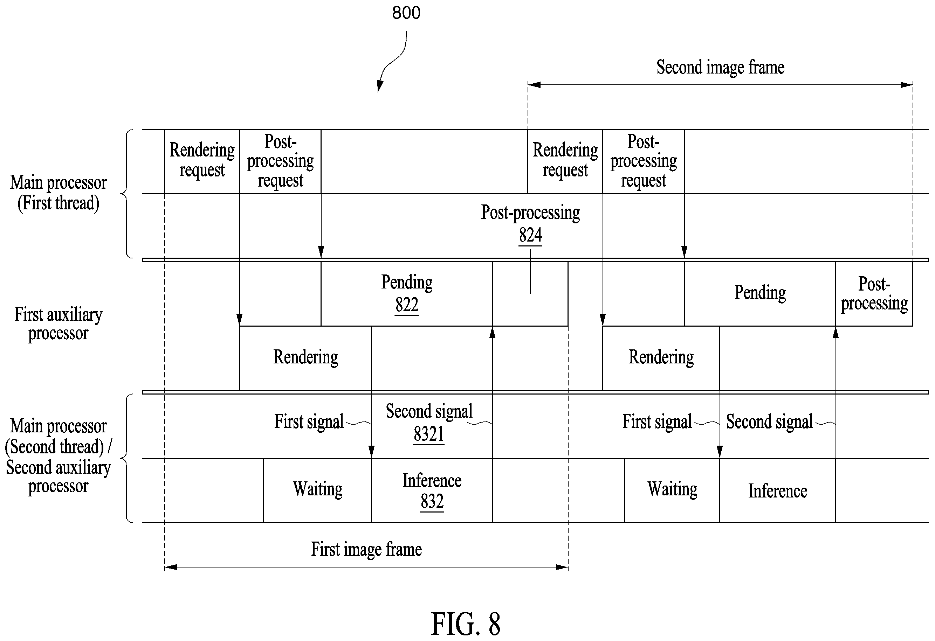

FIG. 8 is a diagram illustrating an example in which uploading is omitted, according to an embodiment. According to embodiments, a process 800 illustrated in FIG. 8 may be performed by a main processor, a first auxiliary processor, and a second auxiliary processor. In some embodiments, the main processor may correspond to the main processor 110 discussed above, the first auxiliary processor may correspond to at least one of the first auxiliary processor 120, the first auxiliary processor 210, and the first auxiliary processor 610 discussed above, and the second auxiliary processor may correspond to at least one of the second auxiliary processor 130, the second auxiliary processor 220, and the second auxiliary processor 620 discussed above, but embodiments are not limited thereto.

Referring to FIG. 8, a main processor may request a second auxiliary processor to perform an inference 832 in a second thread. The main processor may generate a second signal 8321 when the inference 832 is completed. The first auxiliary processor may wait for the second signal 8321 using pending operation 822 and may subsequently perform post-processing 824.

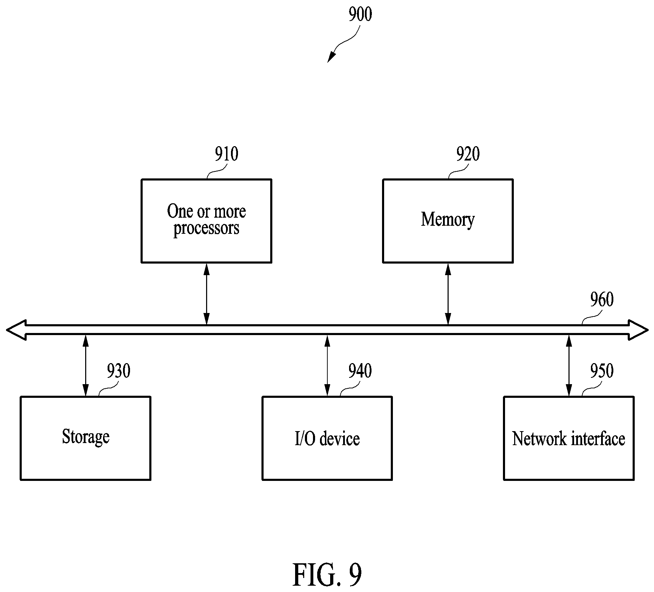

FIG. 9 is a diagram illustrating a configuration of an electronic device, according to an embodiment. Referring to FIG. 9, an electronic device 900 may include one or more processors 910, a memory 920, a storage 930, an input/output (I/O) device 940, and a network interface 950. These components may communicate with each other via a communication bus 960.

The one or more processors 910 may execute instructions stored in the memory 920 or the storage 930. When executed by the one or more processors 910, the instructions may cause the electronic device 900 to perform the operations described with reference to FIGS. 1 to 8. The memory 920 may include a non-transitory computer-readable storage medium or a non-transitory computer-readable storage device. The memory 920 may store instructions to be executed by the one or more processors 910 and may store related information while software and/or an application is being executed by the electronic device 900.

The one or more processors 910 may include a main processor, a first auxiliary processor, and a second auxiliary processor. According to an embodiment, the main processor may request or instruct the first auxiliary processor to render a first image frame to generate first input buffer data and then generate a first signal of a first synchronization object regarding the first input buffer data, request or instruct the first auxiliary processor to perform, based on a second signal of a second synchronization object regarding first output buffer data being generated, post-processing based on the first output buffer data, request or control, based on the first signal being generated, the second auxiliary processor to perform an AI inference based on the first input buffer data to generate the first output buffer data, and generate the second signal based on the AI inference being completed.

According to an embodiment, the main processor may generate a signaling request associated with the first synchronization object to generate the first signal regarding the first input buffer data, attach the signaling request to a rendering request to render the first image frame to generate the first input buffer data, submit the rendering request including the signaling request to a command queue of the first auxiliary processor, generate a wait request associated with the second synchronization object to wait for the second signal regarding the first output buffer data, attach the wait request to a post-processing request to perform the post-processing based on the first output buffer data, and submit the post-processing request including the wait request to the command queue of the first auxiliary processor.

The storage 930 may include a non-transitory computer-readable storage medium or a non-transitory computer-readable storage device. The storage 930 may store a greater amount of information than the memory 920 for a longer period of time. For example, the storage 930 may include a magnetic hard disk, an optical disc, a flash memory, a floppy disk, or other non-volatile memories known in the art.

The I/O device 940 may receive an input from the user in traditional input manners through a keyboard and a mouse and in new input manners such as a touch input, a voice input, and an image input. For example, the I/O device 940 may include a keyboard, a mouse, a touch screen, a microphone, or any other device that detects the input from the user and transmits the detected input to the electronic device 900. The I/O device 940 may provide an output of the electronic device 900 to the user through a visual, auditory, or haptic channel. The I/O device 940 may include, for example, a display, a touch screen, a speaker, a vibration generator, or any other device that provides the output to the user. The network interface 950 may communicate with an external device through a wired or wireless network.

Embodiments described herein may be implemented using a hardware component, a software component, and/or a combination thereof. For example, a processing device may be implemented using one or more general-purpose or special-purpose computers, such as, for example, a processor, a controller, an arithmetic logic unit (ALU), a digital signal processor (DSP), a microcomputer, a field-programmable gate array (FPGA), a programmable logic unit (PLU), a microprocessor, or any other device capable of responding to and executing instructions in a defined manner. The processing device may run an operating system (OS) and one or more software applications that run on the OS. The processing device may also access, store, manipulate, process, and create data in response to execution of the software. For purpose of simplicity, the processing device is described as singular. However, one of ordinary skill in the art will appreciate that a processing device may include multiple processing elements and/or multiple types of processing elements. For example, the processing device may include a plurality of processors, or a single processor and a single controller. In addition, a different processing configuration is possible, such as one including parallel processors.

The software may include a computer program, a piece of code, an instruction, or one or more combinations thereof, to independently or collectively instruct or configure the processing device to operate as desired. The software and/or data may be stored in any type of machine, component, physical or virtual equipment, or computer storage medium or device for the purpose of being interpreted by the processing device or providing instructions or data to the processing device. The software may also be distributed over network-coupled computer systems so that the software is stored and executed in a distributed fashion. The software and data may be stored in a non-transitory computer-readable recording medium.

The methods according to embodiments may be recorded in non-transitory computer-readable media including program instructions to implement various operations of embodiments. The media may also include the program instructions, data files, data structures, and the like alone or in combination. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as compact disc read-only memory (CD-ROM) discs and digital versatile discs (DVDs); magneto-optical media such as floptical disks; and hardware devices that are specially configured to store and perform program instructions, such as read-only memory (ROM), random-access memory (RAM), flash memory, and the like. Examples of program instructions include both machine code, such as those produced by a compiler, and files containing high-level code that may be executed by the computer using an interpreter.

The above-described hardware devices may be configured to act as one or more software modules in order to perform the operations of the above-described embodiments, or vice versa.

The present disclosure may also relate to any of the following clauses.

Clauses 1. An operating method of a main processor, the operating method comprising: instructing a first auxiliary processor to render a first image frame to generate first input buffer data, and to generate a first signal associated with a first synchronization object regarding the first input buffer data; instructing the first auxiliary processor to perform post-processing based on first output buffer data according to a second signal associated with a second synchronization object regarding the first output buffer data; based on the first signal being generated, controlling a second auxiliary processor to perform an artificial intelligence (AI) inference based on the first input buffer data to generate the first output buffer data; and based on the AI inference being completed, generating the second signal.

Clause 2. The operating method of clause 1, wherein the instructing of the first auxiliary processor to generate the first signal and to perform the post-processing are executed in a first thread, and wherein the controlling of the second auxiliary processor to generate the first output buffer data, and the generating of the second signal are executed in a second thread.

Clause 3. The operating method of clause 1 or 2, wherein the instructing of the first auxiliary processor to generate the first signal comprises: generating a signaling request associated with the first synchronization object, wherein the signaling request instructs the first auxiliary processor to generate the first signal regarding the first input buffer data; attaching the signaling request to a rendering request that instructs the first auxiliary processor to render the first image frame to generate the first input buffer data; and submitting the rendering request comprising the signaling request to a command queue of the first auxiliary processor.

Clause 4. The operating method of clause 3, wherein the instructing of the first auxiliary processor to perform the post-processing comprises: generating a wait request associated with the second synchronization object, wherein the wait request instructs the first auxiliary processor to wait for the second signal regarding the first output buffer data; attaching the wait request to a post-processing request that instructs the first auxiliary processor to perform the post-processing based on the first output buffer data; and submitting the post-processing request comprising the wait request to the command queue of the first auxiliary processor.

Clause 5. The operating method of clause 4, wherein, after the rendering request comprising the signaling request is submitted to the command queue of the first auxiliary processor, the post-processing request comprising the wait request is submitted to the command queue of the first auxiliary processor without idle time.

Clause 6. The operating method of any of the clauses 3-5, wherein the first auxiliary processor is configured to: sequentially process commands submitted to the command queue of the first auxiliary processor.

Clause 7. The operating method of any of the clauses 1-6, wherein the first auxiliary processor is configured to use a first memory space, wherein the second auxiliary processor is configured to use a second memory space, and wherein the post-processing is performed by the first auxiliary processor after the first output buffer data is uploaded from the second memory space to the first memory space.

Clause 8. The operating method of clause 7, wherein the first output buffer data is uploaded to the first memory space by the first auxiliary processor based on the second signal.

Clause 9. The operating method of clause 7 or 8, wherein the first output buffer data is uploaded to the first memory space by the second auxiliary processor after the AI inference is completed.

Clause 10. The operating method of any of the clauses 1-9, wherein the first auxiliary processor is not synchronized with the main processor, and wherein the second auxiliary processor is synchronized with the main processor.

Clause 11. The operating method of any of the clauses 1-10, wherein the main processor comprises a central processing unit (CPU), wherein the first auxiliary processor comprises a graphics processing unit (GPU), and the second auxiliary processor comprises an artificial intelligence accelerator.

Clause 12. An electronic device, comprising: a first auxiliary processor; a second auxiliary processor; and a main processor configured to: instruct the first auxiliary processor to render a first image frame to generate first input buffer data, and to generate a first signal of a first synchronization object regarding the first input buffer data; instruct the first auxiliary processor to perform post-processing based on first output buffer data according to a second signal associated with a second synchronization object regarding the first output buffer data; based on the first signal being generated, control the second auxiliary processor to perform an artificial intelligence (AI) inference based on the first input buffer data to generate the first output buffer data; and generate the second signal based on the AI inference being completed.

Clause 13. The electronic device of clause 12, wherein the main processor is further configured to: execute a first thread to instruct the first auxiliary processor to generate the first signal and to perform the post-processing, and execute a second thread to control the second auxiliary processor to generate the first output buffer data, and to generate the second signal.

Clause 14. The electronic device of clause 12 or 13, wherein, to instruct the first auxiliary processor to generate the first signal, the main processor is further configured to: generate a signaling request associated with the first synchronization object, wherein the signaling request instructs the first auxiliary processor to generate the first signal regarding the first input buffer data; attach the signaling request to a rendering request that instructs the first auxiliary processor to render the first image frame to generate the first input buffer data; and submit the rendering request comprising the signaling request to a command queue of the first auxiliary processor.

Clause 15. The electronic device of clause 14, wherein, to instruct the first auxiliary processor to perform the post-processing, the main processor is further configured to: generate a wait request associated with the second synchronization object, wherein the wait request instructs the first auxiliary processor to wait for the second signal regarding the first output buffer data; attach the wait request to a post-processing request that instructs the first auxiliary processor to perform the post-processing based on the first output buffer data; and submit the post-processing request comprising the wait request to the command queue of the first auxiliary processor.

Clause 16. The electronic device of clause 15, wherein, after the rendering request comprising the signaling request is submitted to the command queue of the first auxiliary processor, the post-processing request comprising the wait request is submitted to the command queue of the first auxiliary processor without idle time.

Clause 17. The electronic device of any of the clauses 14-16, wherein the first auxiliary processor is configured to sequentially process commands submitted to the command queue.

Clause 18. The electronic device of the clauses 12-17, wherein the first auxiliary processor is not synchronized with the main processor, and wherein the second auxiliary processor is synchronized with the main processor.

Clause 19. The electronic device of any of the clauses 12-18, wherein: the main processor comprises a central processing unit (CPU); the first auxiliary processor comprises a graphics processing unit (GPU); and the second auxiliary processor comprises an artificial intelligence accelerator.

Clause 20. An electronic device, comprising: an auxiliary processor; and a main processor configured to: generate a signaling request associated with a first synchronization object, wherein the signaling request instructs the auxiliary processor to generate a first signal regarding input buffer data; attach the signaling request to a rendering request that instructs the auxiliary processor to render a first image frame to generate the input buffer data; submit the rendering request comprising the signaling request to a command queue of the auxiliary processor; generate a wait request associated with a second synchronization object, wherein the wait request instructs the auxiliary processor to wait for a second signal regarding output buffer data; attach the wait request to a post-processing request that instructs the auxiliary processor to perform post-processing based on the output buffer data; and submit the post-processing request comprising the wait request to the command queue of the auxiliary processor.

Clause 21. A method for operating a main processor, including: transmitting a first request to a first auxiliary processor, wherein the first request instructs the first auxiliary processor to generate first input buffer data by rendering a first image frame, and to generate a first signal associated with a first synchronization object based on the first input buffer data being generated; before the first signal is generated, transmitting a second request to the first auxiliary processor, wherein the second request instructs the first auxiliary processor to wait for a second signal associated with a second synchronization object, and to perform post-processing on first output buffer data based on receiving the second signal; based on the first signal being generated, controlling a second auxiliary processor to perform a first artificial intelligence (AI) inference based on the first input buffer data to generate the first output buffer data; and based on the first AI inference being completed, generating the second signal.

Clause 22. The method of clause 21, further comprising: before the first auxiliary processor is finished performing the post-processing on the first output buffer data, transmitting a third request to the first auxiliary processor, wherein the third request instructs the first auxiliary processor to generate second input buffer data by rendering a second image frame, and to generate a third signal associated with a third synchronization object based on the second input buffer data being generated.

Clause 23. The method of clause 22, further comprising: before the third signal is generated, transmitting a fourth request to the first auxiliary processor, wherein the fourth request instructs the first auxiliary processor to wait for a fourth signal associated with a fourth synchronization object, and to perform post-processing on second output buffer data based on receiving the fourth signal.

Clause 24. The method of clause 23, further comprising: based on the third signal being generated, controlling the second auxiliary processor to perform a second AI inference based on the second input buffer data to generate the second output buffer data; and based on the second AI inference being completed, generating the fourth signal.

Although some embodiments are described above with reference to the limited number of drawings, one of ordinary skill in the art may apply various technical modifications and variations based thereon. For example, suitable results may be achieved if the described techniques are performed in a different order and/or if components in a described system, architecture, device, or circuit are combined in a different manner and/or replaced or supplemented by other components.

## Claims

1. An operating method of a main processor, the operating method comprising:
instructing a first auxiliary processor to render a first image frame to generate first input buffer data, and to generate a first signal associated with a first synchronization object regarding the first input buffer data;
instructing the first auxiliary processor to perform post-processing based on first output buffer data according to a second signal associated with a second synchronization object regarding the first output buffer data;
based on the first signal being generated, controlling a second auxiliary processor to perform an artificial intelligence, 'AI', inference based on the first input buffer data to generate the first output buffer data; and
based on the AI inference being completed, generating the second signal.

2. The operating method of claim 1, wherein the instructing of the first auxiliary processor to generate the first signal and to perform the post-processing are executed in a first thread, and
wherein the controlling of the second auxiliary processor to generate the first output buffer data, and the generating of the second signal are executed in a second thread.

3. The operating method of claim 1 or 2, wherein the instructing of the first auxiliary processor to generate the first signal comprises:
generating a signaling request associated with the first synchronization object, wherein the signaling request instructs the first auxiliary processor to generate the first signal regarding the first input buffer data;
attaching the signaling request to a rendering request that instructs the first auxiliary processor to render the first image frame to generate the first input buffer data; and
submitting the rendering request comprising the signaling request to a command queue of the first auxiliary processor.

4. The operating method of claim 3, wherein the instructing of the first auxiliary processor to perform the post-processing comprises:
generating a wait request associated with the second synchronization object, wherein the wait request instructs the first auxiliary processor to wait for the second signal regarding the first output buffer data;
attaching the wait request to a post-processing request that instructs the first auxiliary processor to perform the post-processing based on the first output buffer data; and
submitting the post-processing request comprising the wait request to the command queue of the first auxiliary processor.

5. The operating method of claim 4, wherein, after the rendering request comprising the signaling request is submitted to the command queue of the first auxiliary processor, the post-processing request comprising the wait request is submitted to the command queue of the first auxiliary processor without idle time.

6. The operating method of any of the claims 3-5, wherein the first auxiliary processor is configured to sequentially process commands submitted to the command queue of the first auxiliary processor.

7. The operating method of any of the previous claims, wherein the first auxiliary processor is configured to use a first memory space,
wherein the second auxiliary processor is configured to use a second memory space, and
wherein the post-processing is performed by the first auxiliary processor after the first output buffer data is uploaded from the second memory space to the first memory space.

8. The operating method of claim 7, wherein the first output buffer data is uploaded to the first memory space by the first auxiliary processor based on the second signal.

9. The operating method of claim 7 or 8, wherein the first output buffer data is uploaded to the first memory space by the second auxiliary processor after the AI inference is completed.

10. The operating method of any of the previous claims, wherein the first auxiliary processor is not synchronized with the main processor, and
wherein the second auxiliary processor is synchronized with the main processor.

11. The operating method of any of the previous claims, wherein the main processor comprises a central processing unit, 'CPU',
wherein the first auxiliary processor comprises a graphics processing unit, 'GPU', and
wherein the second auxiliary processor comprises an artificial intelligence accelerator.

12. The operating method of any of the previous claims, wherein the method further comprises, before the first signal is generated, transmitting a second request to the first auxiliary processor, wherein the second request instructs the first auxiliary processor to wait for a second signal associated with a second synchronization object, and to perform post-processing on first output buffer data based on receiving the second signal.

13. The operating method of claim 12, wherein the method further comprises, before the first auxiliary processor is finished performing the post-processing on the first output buffer data, transmitting a third request to the first auxiliary processor, wherein the third request instructs the first auxiliary processor to generate second input buffer data by rendering a second image frame, and to generate a third signal associated with a third synchronization object based on the second input buffer data being generated,
wherein the method preferably further comprises, before the third signal is generated, transmitting a fourth request to the first auxiliary processor, wherein the fourth request instructs the first auxiliary processor to wait for a fourth signal associated with a fourth synchronization object, and to perform post-processing on second output buffer data based on receiving the fourth signal,
wherein the method more preferably further comprises, based on the third signal being generated, controlling the second auxiliary processor to perform a second AI inference based on the second input buffer data to generate the second output buffer data, and based on the second AI inference being completed, generating the fourth signal.

14. A non-transitory computer-readable medium storing instructions which, when executed by a processor, cause the processor to perform the method of any of the previous claims.

15. An electronic device, comprising:
a first auxiliary processor;
a second auxiliary processor; and
a main processor configured to perform the method according to any of the claims 1-13.
